# EUROPEAN PATENT SPECIFICATION

(11) **EP 3 548 725 B1**
(45) Date of publication and mention of the grant of the patent: **03.01.2024**
(21) Application number: 17804552.2
(22) Date of filing: 27.11.2017
(51) Int. Cl.: F02B 23/06, F02F 3/26, F02F 3/28

(54) **COMBUSTION CYLINDER**
VERBRENNUNGSZYLINDER
CYLINDRE DE COMBUSTION

(30) Priority: 02.12.2016 GB 201620510
(43) Date of publication of application: 09.10.2019
(73) Proprietor: Perkins Engines Company Limited, Eastfield, Peterborough PE1 5FQ (GB)
(72) Inventor: PAGE, Vivian, Bourne Lincolnshire PE10 9SQ (GB); GOVINDARAJAN, Rukmangadhan, Peterborough Cambridgeshire PE1 5FQ (GB)
(74) Representative: Novagraaf Group
(86) International application number: PCT/EP2017/080572
(87) International publication number: WO 2018/099875

(56) References cited:
- US-A1- 2006 070 603
- US-A1- 2013 239 925
- US-B2- 9 328 693

## Description

### Technical Field

This disclosure relates generally to combustion cylinders with piston bowls for internal combustion engines

### Background

Increasing engine efficiency and reducing emissions is a desire of engine manufacturers and users alike.

Combustion characteristics within a combustion chamber of an engine may be influenced by, among other things, shape of the combustion chamber and injection characteristics of fuel injected into the combustion chamber. In this way, factors such as fuel combustion efficiency and the composition of combustion emissions may be influenced. Composition of combustion emissions includes an extent to which combustion produces NOₓ and particulate matter, such as soot.

An engine may have a combustion chamber bounded by an interior surface of a combustion cylinder and a top surface of a piston that reciprocates within the combustion cylinder. In such a combustion chamber, it is possible to influence combustion characteristics by altering the top surface of the piston that faces a fuel injector configured to inject fuel into the combustion cylinder. It is also possible to influence combustion characteristics by altering the distribution of fuel injected into the combustion chamber.

It is known to provide a variety of different piston bowls within the top surface of the piston.

The shape of a combustion bowl may be dictated by, among other things, whether it is intended for the fuel to target a feature of the piston bowl in order to distribute fuel vapour within the bowl (known as a targeted piston bowl) or it is intended for the fuel to be guided by the bowl without making a targeted impact (known as a spray guided piston bowl). Whether a piston bowl is employed for targeted or spray guided use is also governed by the manner of fuel injection within the cylinder. Injection behaviour may be governed, among other things, by the number and arrangement of injection orifices, including the angle of such orifices relative to the combustion cylinder. The present disclosure relates to spray guided piston bowls.

Given increases in engine efficiency and changes to regulatory regimes, there may be a desire to produce smaller engines. However, for various reasons, it may not be appropriate simply to scale all dimensions of a combustion cylinder and piston. One reason for this may be that fuel injection behaviour may not be easily scalable and/or, to the extent that fuel injection behaviour may be scalable, it may be undesirable for other reasons.

In producing smaller engines, it may be desirable to increase a swirl ratio, that being defined as angular rotational speed of trapped gases within the cylinder about the cylinder axis divided by engine speed. This may be desirable in order to promote efficient mixing of the fuel and air and limit the penetration of the combusting gases.

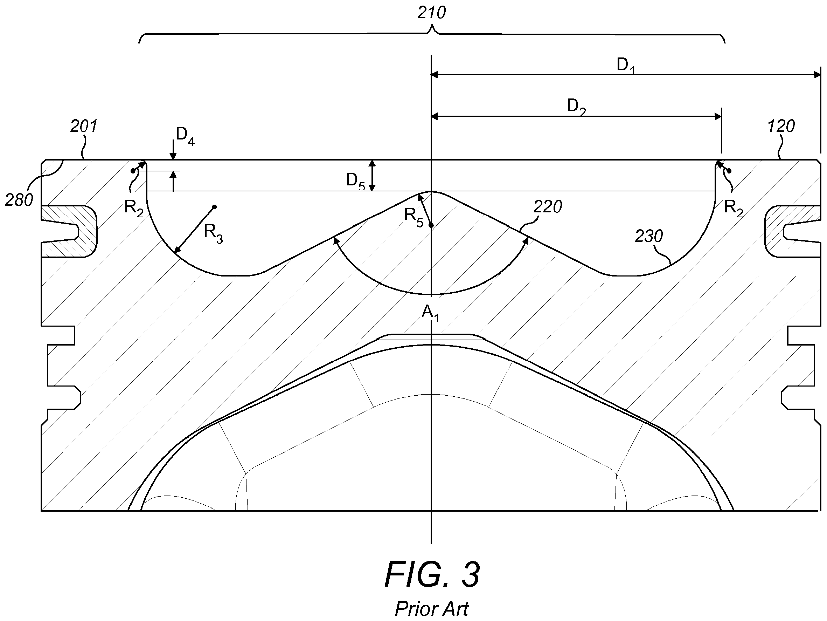

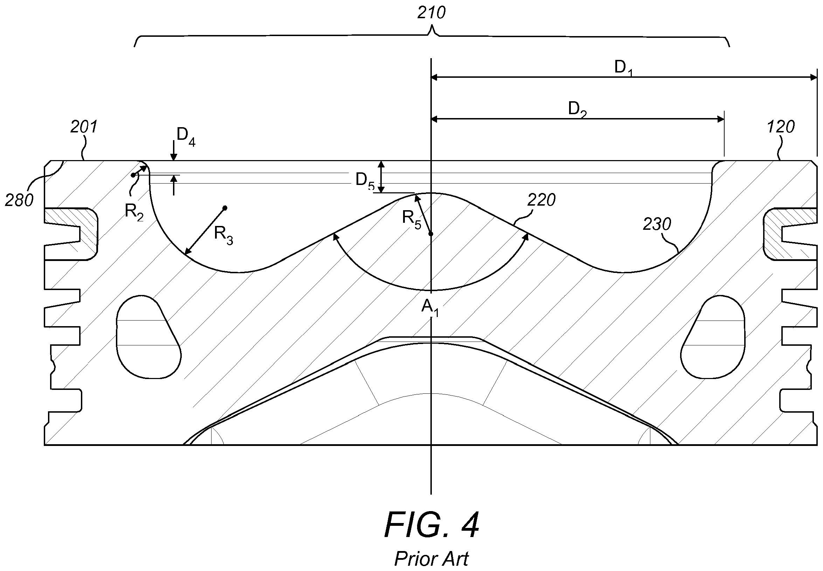

The present disclosure relates to spray guided piston bowls developed from larger prior art spray guided piston bowls (as illustrated in Figures 3 and 4). The piston bowls of the present disclosure may be suitable for a smaller diameter combustion cylinder with high efficiency and low emissions.

US2013239925 discloses a piston for a compression ignition internal combustion engine that includes a piston body having a combustion face defining a combustion bowl, and the combustion face including a compound bowl surface and a compound rim surface. The combustion face is profiled to balance a combustion efficiency property of the piston with emissions properties of the piston. A ratio of a diameter of the combustion bowl to a diameter of the cylinder bowl bore is from 0.68 to 0.74. Other dimensional and proportional features of the piston support low smoke and NOx production during operation.

### Summary of disclosure

Against this background, there is provided a combustion cylinder in accordance with claim 1.

### Brief description of the drawings

Figure 1 shows a cross-sectional schematic view of one end of a piston including a piston bowl in accordance with an aspect of the disclosure in situ in an engine cylinder;
Figure 2 shows a cross-sectional schematic view of the piston of Figure 1;
Figure 3 shows a cross-sectional schematic view of a first prior art piston bowl, for purposes of comparison;
Figure 4 shows a cross-sectional schematic view of a second prior art piston bowl, for purposes of comparison;
Figure 5 shows a cross-sectional schematic view of a first option of a lip geometry of the piston bowl of Figure 1 that falls within the scope of the claims;
Figure 6 shows a cross-sectional schematic view of a second option of a lip geometry of the piston bowl of Figure 1 that does not fall within the scope of the claims;
Figure 7 shows a cross-sectional schematic view of an injector suitable for use with the piston bowl of the present disclosure;
Figure 8 provides a graph showing performance of the piston bowl of Figures 1 and 2 versus prior art piston bowls such as those of Figures 3 and 4; and
Figure 9 provides a graph showing performance of the piston bowl of Figures 1 and 2 versus prior art piston bowls such as those of Figures 3 and 4.

### Detailed description

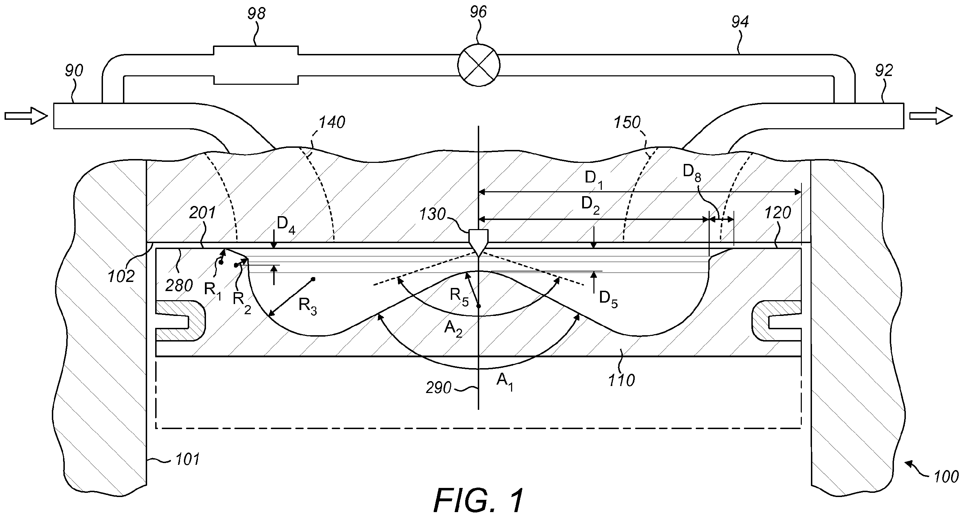

Figure 1 shows a cross section through a cylinder 100 of an internal combustion engine together with related features. The cylinder comprises an internal bore 101. The internal bore 101 accommodates a piston 110. The piston 110 is coaxial with the internal bore 101 of the cylinder 100 such that the piston 110 is movable relative to the cylinder 100 in an axial direction.

The cylinder 100 comprises a fuel injector 130 located a top end 102 of the cylinder 100.

The fuel injector 130 may be located coaxially with the internal bore 101 of the cylinder such that fuel injected by the fuel injector 130 may enter the internal bore 101 at the axis. The fuel injector 130 may comprise a fuel injector head (not shown) for distributing fuel in accordance with a desired geometrical arrangement.

The piston 110 comprises a piston crown 120 and a piston body (not shown but located underneath the piston crown 120 in the orientation of Figure 1). The piston crown 120 is at a head end of the piston 110 such that the piston crown 120 of the piston 110 faces the fuel injector 130.

The cylinder 100 may further comprise an oxidant inlet 140 for selectively allowing inlet of an oxidant, such as air, to facilitate combustion and an exhaust outlet 150 for selectively allowing release of combustion products from the cylinder 100. The oxidant inlet 140 and the exhaust outlet 150 may be located at the top end 102 of the cylinder 100 adjacent the fuel injector 130.

An intake passage 90 is in fluid communication with, and configured to supply air to, cylinder 100, and an exhaust passage 92 is also in fluid communication with, and conveys combustion products out of, cylinder 100. Intake valves and exhaust valves are not shown in Figure 1, but will typically be provided in a conventional manner. An exhaust gas recirculation loop 94 may connect passages 90 and 92, and may have an exhaust recirculation control valve 96 and an exhaust gas cooler 98 positioned therein.

In Figure 1, the piston 110 is shown relative to the cylinder 110 at a position in its oscillating cycle that is closest to the top end 102 of the cylinder 100.

The piston crown 120 has an axial direction that sits vertically in the orientation of Figure 1 and a radial direction that sits horizontally in the orientation of Figure 1. The piston crown 120 is rotationally symmetrical about a central axis 290 in the axial direction. The central axis 290 of the piston crown 120 is, when in situ in the cylinder, coaxial with a central axis of the fuel injector 130.

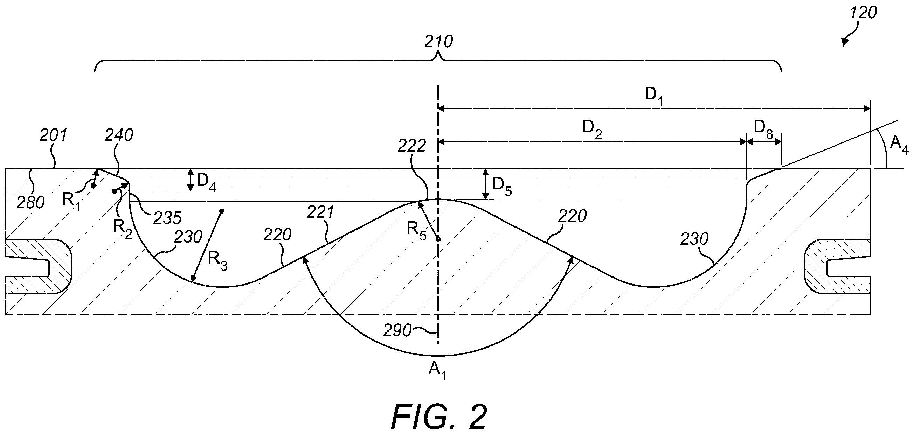

Figure 2 shows the piston of Figure 1 in isolation from the cylinder 100. Referring to Figure 2, the piston crown 120 comprises an annular surface 201 at a first end 280 of the piston crown 120 in the axial direction that, when in situ in the cylinder 100, faces the fuel injector 130. The annular surface 201 may be radially furthest from the central axis 290.

The piston crown 120 further comprises a piston bowl 210 located radially within the annular surface 201 and recessed relative to the first end 280 of the piston crown.

The piston bowl 210 comprises a raised floor 220 in a radially central region of the piston bowl 120. The piston bowl 210 further comprises an arcuate surface 230 located radially outward relative to the raised floor 220. The piston bowl 210 further comprises a circumferential surface 235 parallel to the axis of the piston bowl 210 and located radially outward relative to the arcuate surface 230. The piston bowl 210 further comprises a lip chamfer surface 240 extending radially outwardly from the circumferential surface 235 and radially inwardly from the annular surface 201.

The raised floor 220 comprises a frusto-conical surface 221 tapering in a direction of the first end 280 of the piston crown towards a spherical cap 222 that caps the frusto-conical surface 221. An angle of the frusto-conical surface 221 relative to a plane orthogonal to the axis 290 is the same as an angle of the lowest portion of the spherical cap 222 so as to avoid any surface discontinuity at the interface between the frusto-conical surface 221 and the spherical cap 222. Put another way, a diameter of the frusto-conical surface 221 at its smaller end is the same as a widest dimension of the spherical cap 222. Furthermore, the diameter of the frusto-conical surface 221 is aligned with the widest dimension of the spherical cap 222.

The arcuate surface 230, when the piston 120 is viewed in diametric cross section, has a single radius between where the arcuate surface 230 interfaces with a radially outermost end of the frusto-conical surface 221 and where the arcuate surface 230 interfaces with the circumferential surface 235 parallel to the axis of the piston bowl 210.

The lip chamfer surface 240 that extends radially outwardly from the circumferential surface 235 and radially inwardly from the annular surface 201 tapers such that a widest portion of the piston bowl 210 is at its entrance. Its entrance is location in a plane shared with the annular surface 201 at the first end of the piston crown 280.

The cylinder 100 in which the piston 120 reciprocates has a radius D₁ such that an overall diameter of the cylinder 100 is 2D₁. A diameter of a largest part of the piston 120 is smaller than 2D₁. The circumferential surface 235 of the piston 120 has a radius D₂ such that the diameter of the circumferential surface 235 is 2D₂. The lip chamfer surface 240 has a radial dimension D₈. In this way, a diameter of the piston bowl throat in the plane of the annular surface 201 is 2(D₂ + Ds). A dimension along the axis of the piston between the plane of the annular surface 201 and a part of the spherical cap closest thereto is D₅.

An angle between opposing straight line portions (that is, when viewed in diametric cross-section) of the frusto-conical surface 221 is A₁. For comparison purposes, an angle between axes of injector orifices configured to inject fuel into the cylinder is A₂.

A radius of curvature between the annular surface 201 and the lip chamfer surface 240 is R₁, and in the claimed embodiments R₁ is zero. A radius of curvature between the lip chamfer surface 240 and the circumferential surface 235 is R₂. A radius of curvature of the arcuate surface 230 is R₃. A radius of curvature of the spherical cap 222 is R₅.

For the avoidance of doubt, the radii of curvature R₁, R₂, R₄ and R₅ are those identifiable in diametric cross-section through the axis of the piston 120. It should be noted that, for clarity, the radii marked on the Figures are drawn to arbitrary lengths and do not relate in any way to the absolute length or to the relative length of the radii they represent.

A dimension in an axial direction between the annular surface 201 and the origin of the radius R2 is D₄.

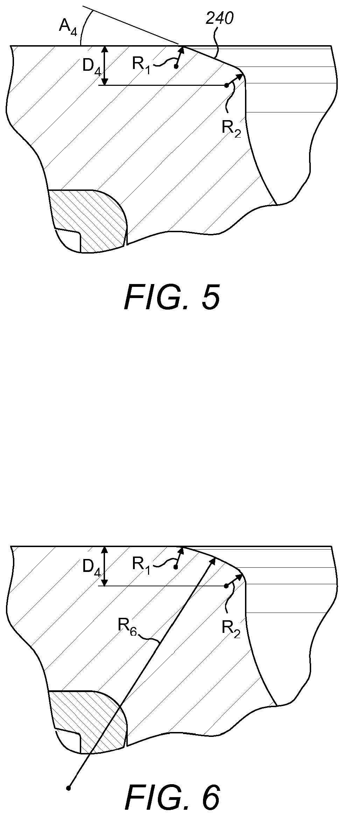

In a first embodiment, the lip chamfer surface 240 is a straight line between an inner end of the radii R₁ and an outer end of the radii R₂, when viewed in diametric cross-section through the axis of the piston 120. An angle between the straight line of the lip chamber surface 240 and the annular surface 201 is A₄. This is shown in more detail in Figure 5, albeit highly schematically.

In an alternative arrangement falling outside the scope of the claims, the lip chamfer surface 240 is curved between an inner end of the radii R₁ and an outer end of the radii R₂, when viewed in diametric cross-section through the axis of the piston 120. The radius of curvature of the lip chamfer surface 240 in such an arrangement is R₆. This is shown in Figure 6, albeit highly schematically, particularly since R₆ may be sufficiently large as not to be immediately identifiable at the scale shown in Figure 6. An angle between a tangent to the radius R₆ and the annular surface 201 is A₄ (for clarity, the tangent and angle are not shown in Figure 6).

In the case of the Figure 6 arrangement that falls outside the scope of the claims, the value A₄ may be between 19 ° and 21 °. In the case of the Figure 5 embodiment, the value A₄ is 20 °.

Some specific exemplary Figures for the parameters described above and identified in the Figures are provided in the table below. Figures 1, 2 and 5 show embodiments of the present disclosure, Figure 6 shows an arrangement that falls outside the scope of the claims and Figures 3 and 4 relate to prior art piston bowls.

| | Figures 1, 2, 5 & 6 | Figure 3 | Figure 4 |
|---|---|---|---|
| R₁ | 0 mm | n/a | n/a |
| R₂ | 1.5 mm | 1.5 mm | 1.5 mm |
| R₃ | 10.5 mm | 12 mm | 12 mm |
| R₅ | 10 mm | 9.98 mm | 10 mm |
| R₆ | n/a or > 30 mm | n/a | n/a |
| A₁ | 125.7 degrees | 125 degrees | 125 degrees |
| A₂ | 130 degrees | 130 degrees | 130 degrees |
| A₂ minus A₁ | 4.3 degrees | 5 degrees | 5 degrees |
| A₄ | 20 degrees | n/a | n/a |
| D₁ (bore radius) | 49 mm | 52.5 mm | 52.5 mm |
| D₂ | 34.95 mm | 38.3 mm | 38.3 mm |
| | | | |
| D₄ | 2.49 mm | 1.5 mm | 1.5 mm |
| D₅ | 3.55 mm | 4.81 mm | 3.97 mm |
| D₈ | 3.95 mm | 0 mm | 0 mm |
| Number of injector orifices | 6 | 6 | 6 |
| Bowl volume | 42.1 cm3 | 58.5 cm3 | 54.6 cm3 |
| Compression ratio | 17.0:1 | 16.5: 1 | 16.5:1 |
| Swirl ratio | 1.8 | 0.4 | 0.6 |

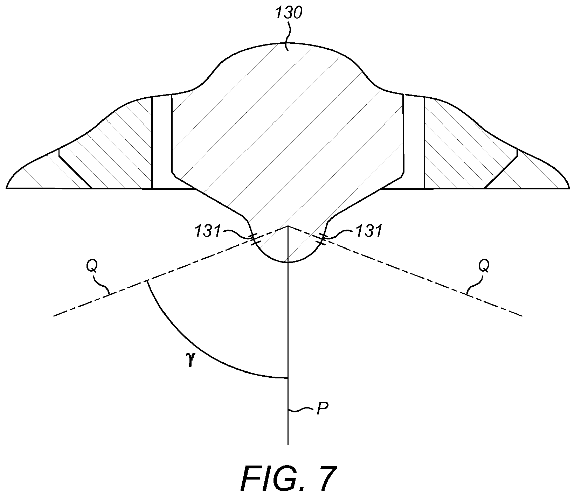

In use, fuel is injected into the combustion chamber from an injector 130 shown in Figures 1 and 7. The injector 130 comprises a plurality of spray discharge orifices 131 through which fuel may be injected. In the claimed embodiment, the number of spray discharge orifices 131 is six (6).

Each spray discharge orifice 131 has a central axis Q. Central axis Q passes through the centre point of each spray discharge orifice 131. In an embodiment, each central axis Q may be transverse to a plane extending across each respective spray discharge orifice 131. In an embodiment, each spray discharge passage has a longitudinal axis that is coincident with central axis Q of respective spray discharge orifice 131. Each respective spray discharge passage may extend along the central axis Q. In an embodiment, each central axis Q may be normal to a plane extending across each respective inlet.

Each central axis Q has an angle γ relative to a central axis P of the injector 130 which is coincident with the central axis of the piston 290. In some comparative examples, each central axis Q may have an angle γ of approximately 64.5 ° to 65.5 ° relative to the central axis P. According to the claims, each central axis Q has an angle γ of 65 ° relative to the central axis P. Fuel injector 10 has a spray cone angle A₂ (see Figure 1) that is defined by angle 2γ (see Figure 7). Accordingly, in the comparative examples, fuel vapour from the plurality of spray discharge orifices 131 may be discharged with a spray cone angle of approximately 129 ° to 131 °. According to the claims, fuel vapour from the plurality of spray discharge orifices 131 is discharged with a spray cone angle of 130 °.

Fuel may be discharged from the plurality of spray discharge orifices 131 at a flow rate of 680 to 720 cc/min. Fuel may be expelled from the plurality of spray discharge orifices 131 at a flow rate of 700 cc/min.

As mentioned previously, a swirl ratio is defined as angular rotational speed about the cylinder axis. In the claimed embodiment, a swirl ratio of 1.8 is employed. This may promote efficient mixing of the fuel and air and avoid combustion products residing in specific areas that may affect engine durability.

The lip chamfer surface 240 may be particularly beneficial in a piston of reduced size since it promotes distribution of fuel leaving the piston bowl. As distinct from the prior art embodiments of Figures 3 and 4 which have larger combustion volumes, the lip chamfer surface 240 of the embodiments of the present disclosure may encourage improved fuel distribution for improved thermal distribution and improved combustion efficiency, perhaps most particularly applicable in a combustion cylinder operating a fuel injector with a swirl ratio of approximately 1.8.

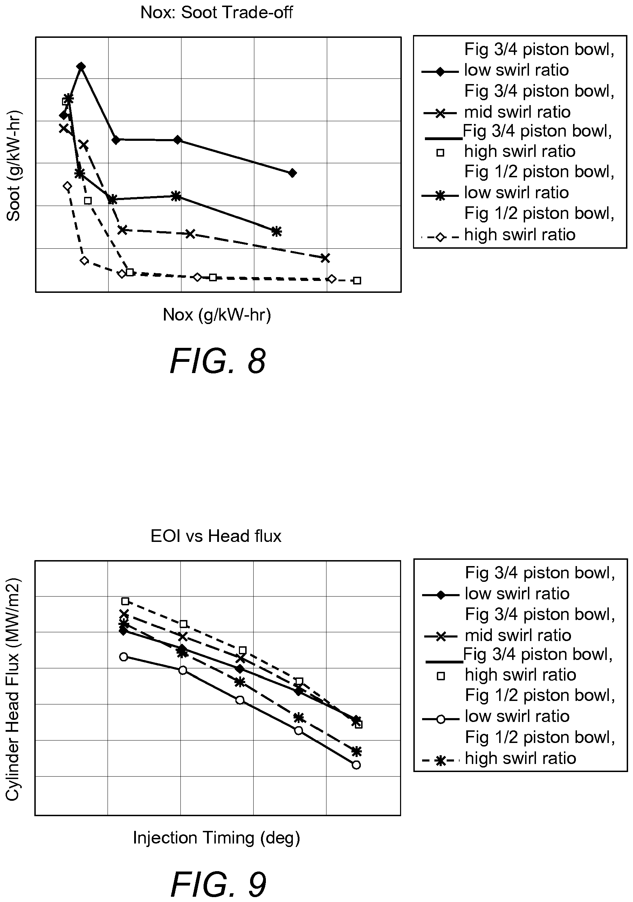

Figure 8 provides a plot of soot against NOₓ for piston bowls in accordance with the disclosure (e.g. Figures 1 and 2) relative to piston bowls of the prior art (e.g. Figures 3 and 4). As can be seen, the piston bowl of the present disclosure provides lower soot than the piston bowl of the prior art, when using the same swirl ratio.

Figure 9 provides a plot of flux versus injection timing and shows plots both for piston bowls in accordance with the prior art (e.g. Figures 3 and 4) and piston bowls of the present disclosure (e.g. Figures 1 and 2).

### Industrial applicability

The present disclosure relates to a spray guided piston bowl that may be applicable to a diesel engine for achieving improved fuel to air mixing that in turn results in more efficient combustion and reduced NOₓ and/or particulate emissions.

The piston may be of aluminium. The engine may be based on a known larger engine with a reduced piston diameter and volume and adapted to improve efficiency and to target specific emissions outputs.

## Claims

1. A combustion cylinder (100) of an internal combustion engine, configured to provide a swirl ratio of 1.8, the combustion cylinder (100) comprising:
a fuel injector (130) having 6 fuel spray discharge orifices arranged so as to provide a fuel injection cone angle of 130 degrees; and
a piston (110) having a piston crown (120), the piston (110) having a diameter of 98 mm, and,
the piston crown (120) extending in an axial direction along a central axis (290) and in a radial direction outwardly from the central axis (290), the piston crown (120) comprising: an annular surface (201) at a first end (280) of the piston crown (120) in the axial direction; and a piston bowl (210) located radially within the annular surface (201) and recessed relative to the first end (280) of the piston crown (120); wherein the piston bowl (210) comprises:
a raised floor (220) having an axis of rotation (290) coincident with the central axis (290) of the piston crown (120), the raised floor (220) comprising a frusto-conical portion (221) tapering in a direction of the first end (280) of the piston crown (120) towards a spherical cap portion (222) capping the frusto-conical portion (221);
an arcuate surface (230) located radially outward relative to the raised floor (220);
a circumferential surface (235) parallel to the central axis (290) of the piston bowl (210) at a radially outward end of the arcuate surface (230); and
a lip chamfer surface (240) extending radially outwardly from the circumferential surface (235) and radially inwardly from the annular surface (201) and tapering away from the first end (280) of the piston crown (120);
wherein in diametric cross-section the lip chamfer surface (240) is a straight line;
wherein the diameter of the circumferential surface (235) is 69.9 mm;
wherein a radius of curvature between the annular surface (201) and the lip chamfer surface (240) is 0 mm;
wherein a radius of curvature between the lip chamfer surface (240) and the circumferential surface (235) is 1.5 mm;
wherein in diametric cross-section the arcuate surface (230) comprises a circular arc having a radius of 10.5 mm;
wherein a radius of curvature of the spherical cap portion (222) is 10 mm;
wherein an angle between opposing straight line portions of the frusto-conical portion (221) is 125.7 degrees;
wherein an angle between the lip chamfer surface (240) and the annular surface (201) is 20 degrees;
wherein a dimension in the axial direction measured from the annular surface (201) to an origin of the radius of curvature between the circumferential surface (235) and the lip chamfer surface (240) is 2.49 mm;
wherein a dimension along the central axis (290) between the plane of the annular surface (201) and a part of the spherical cap closest thereto is 3.55 mm;
wherein lip chamfer surface (240) extends 3.95 mm in a radial dimension;
wherein the piston bowl (210) has a volume of 42.1 cm³; and
wherein the combustion cylinder has a compression ratio of 17.0:1.

2. The combustion cylinder (100) of claim 1 wherein the fuel injector (130) is mounted at an end of the combustion cylinder (120) facing the piston crown (120).

3. The combustion cylinder (100) of any preceding claim wherein a difference between the fuel injection cone angle and an angle between opposing sides of the frusto-conical portion is 4.3 °.

4. An internal combustion engine comprising the combustion cylinder (100) of any preceding claim and an intake valve and an exhaust valve.

## Patentansprüche

1. Verbrennungszylinder (100) eines Verbrennungsmotors, der konfiguriert ist, um ein Wirbelverhältnis von 1,8 bereitzustellen, der Verbrennungszylinder (100) umfassend:
eine Kraftstoff-Einspritzdüse (130), die 6 Kraftstoffnebelauslassöffnungen aufweist, die angeordnet sind, um einen Kraftstoffeinspritzkonus von 130 Grad bereitzustellen; und
einen Kolben (110), der einen Kolbenboden (120) aufweist, wobei der Kolben (110) einen Durchmesser von 98 mm aufweist, und
wobei sich der Kolbenboden (120) in einer axialen Richtung entlang einer Mittelachse (290) und in einer radialen Richtung nach außen von der Mittelachse (290) erstreckt, der Kolbenboden (120) umfassend eine ringförmige Oberfläche (201) an einem ersten Ende (280) des Kolbenbodens (120) in der axialen Richtung; und eine Kolbenmulde (210), die sich radial innerhalb der ringförmigen Oberfläche (201) befindet und relativ zu dem ersten Ende (280) des Kolbenbodens (120) vertieft ist; wobei die Kolbenmulde (210) umfasst:
einen erhöhten Boden (220), der eine Drehachse (290) aufweist, die mit der Mittelachse (290) des Kolbenbodens (120) zusammenfällt, der erhöhte Boden (220) umfassend einen kegelstumpfförmigen Abschnitt (221), der sich in einer Richtung des ersten Endes (280) des Kolbenbodens (120) zu einem kugelförmigen Kappenabschnitt (222) verjüngt, der den kegelstumpfförmigen Abschnitt (221) verkappt;
eine bogenförmige Oberfläche (230), die sich relativ zu dem erhöhten Boden (220) radial nach außen befindet;
eine Umfangsoberfläche (235) parallel zu der Mittelachse (290) der Kolbenmulde (210) an einem radial nach außen gerichteten Ende der bogenförmigen Oberfläche (230); und
eine Lippe-Fasenoberfläche (240), die sich von der Umfangsoberfläche (235) radial nach außen und von der ringförmigen Oberfläche (201) radial nach innen erstreckt und sich von dem ersten Ende (280) des Kolbenbodens (120) weg verjüngt;
wobei in diametralem Querschnitt die Lippe-Fasenoberfläche (240) eine gerade Linie ist;
wobei der Durchmesser der Umfangsoberfläche (235) 69,9 mm beträgt;
wobei ein Krümmungsradius zwischen der ringförmigen Oberfläche (201) und der Lippe-Fasenoberfläche (240) 0 mm beträgt;
wobei ein Krümmungsradius zwischen der Lippe-Fasenoberfläche (240) und der Umfangsoberfläche (235) 1,5 mm beträgt;
wobei in einem diametralen Querschnitt die bogenförmige Oberfläche (230) einen Kreisbogen umfasst, der einen Radius von 10,5 mm aufweist;
wobei ein Krümmungsradius des kugelförmigen Kappenabschnitts (222) 10 mm beträgt;
wobei ein Winkel zwischen gegenüberliegenden geraden Linienabschnitten des kegelstumpfförmigen
Abschnitts (221) 125,7 Grad beträgt;
wobei ein Winkel zwischen der Lippe-Fasenoberfläche (240) und der ringförmigen Oberfläche (201) 20 Grad beträgt;
wobei eine Abmessung in der axialen Richtung, die von der ringförmigen Oberfläche (201) zu einem Ursprung des Krümmungsradius zwischen der Umfangsoberfläche (235) und der Lippe-Fasenoberfläche (240) gemessen wird, 2,49 mm beträgt;
wobei eine Abmessung entlang der Mittelachse (290) zwischen der Ebene der ringförmigen Oberfläche (201) und einem Teil der kugelförmigen Kappe, der sich am nächsten dazu befindet, 3,55 mm beträgt;
wobei sich die Lippe-Fasenoberfläche (240) in einer radialen Abmessung um 3,95 mm erstreckt;
wobei die Kolbenmulde (210) ein Volumen von 42,1 cm³ aufweist; und
wobei der Verbrennungszylinder ein Verdichtungsverhältnis von 17,0:1 aufweist.

2. Verbrennungszylinder (100) nach Anspruch 1, wobei die Kraftstoff-Einspritzdüse (130) an einem dem Kolbenboden (120) zugewandten Ende des Verbrennungszylinders (120) montiert ist.

3. Verbrennungszylinder (100) nach einem der vorstehenden Ansprüche, wobei eine Differenz zwischen dem Kraftstoffeinspritzkonuswinkel und einem Winkel zwischen gegenüberliegenden Seiten des kegelstumpfförmigen Abschnitts 4,3 ° beträgt.

4. Verbrennungsmotor, umfassend den Verbrennungszylinder (100) nach einem der vorstehenden Ansprüche und ein Einlassventil und ein Auslassventil.

## Revendications

1. Cylindre de combustion (100) d'un moteur à combustion interne, conçu pour fournir un taux de tourbillonnement de 1,8, ledit cylindre de combustion (100) comprenant :
un injecteur de carburant (130) ayant 6 orifices de déversement des jets de carburant agencés de manière à fournir un angle de cône d'injection de carburant de 130 degrés ; et
un piston (110) ayant une couronne de piston (120), ledit piston (110) ayant un diamètre de 98 mm, et,
la couronne de piston (120) s'étendant dans une direction axiale le long d'un axe central (290) et dans une direction radiale vers l'extérieur à partir de l'axe central (290), ladite couronne de piston (120) comprenant : une surface annulaire (201) au niveau d'une première extrémité (280) de la couronne de piston (120) dans la direction axiale ; et une cuve de piston (210) située radialement à l'intérieur de la surface annulaire (201) et en retrait par rapport à la première extrémité (280) de la couronne de piston (120) ; dans lequel la cuve de piston (210) comprend :
un fond surélevé (220) ayant un axe de rotation (290) coïncidant avec l'axe central (290) de la couronne de piston (120), ledit fond surélevé (220) comprenant une portion tronconique (221) s'effilant dans une direction de la première extrémité (280) de la couronne de piston (120) vers une portion à cape sphérique (222) coiffant la partie tronconique (221) ;
une surface arquée (230) située radialement en direction de l'extérieur par rapport au fond surélevé (220) ;
une surface circonférentielle (235) parallèle à l'axe central (290) de la cuve de piston (210) au niveau d'une extrémité radialement pointée vers l'extérieur de la surface arquée (230) ; et
une surface de chanfrein à lèvre (240) s'étendant radialement vers l'extérieur à partir de la surface circonférentielle (235) et radialement vers l'intérieur à partir de la surface annulaire (201) et s'effilant en s'éloignant de la première extrémité (280) de la couronne de piston (120) ;
dans lequel, en coupe transversale diamétrale, la surface de chanfrein à lèvre (240) est une ligne droite ;
dans lequel le diamètre de la surface circonférentielle (235) est de 69,9 mm ;
dans lequel un rayon de courbure entre la surface annulaire (201) et la surface de chanfrein à lèvre (240) est de 0 mm ;
dans lequel un rayon de courbure entre la surface de chanfrein à lèvre (240) et la surface circonférentielle (235) est de 1,5 mm ;
dans lequel, en coupe transversale diamétrale, la surface arquée (230) comprend un arc circulaire ayant un rayon de 10,5 mm ;
dans lequel un rayon de courbure de la portion à cape sphérique (222) est de 10 mm ;
dans lequel un angle entre les portions de ligne droite opposées de la portion tronconique (221) est de 125,7 degrés ;
dans lequel un angle entre la surface de chanfrein à lèvre (240) et la surface annulaire (201) est de 20 degrés ;
dans lequel une dimension dans la direction axiale mesurée à partir de la surface annulaire (201) vers une origine du rayon de courbure entre la surface circonférentielle (235) et la surface de chanfrein à lèvre (240) est de 2,49 mm ;
dans lequel une dimension le long de l'axe central (290) entre le plan de la surface annulaire (201) et une partie de la cape sphérique la plus proche est de 3,55 mm ;
dans lequel la surface de chanfrein à lèvre (240) s'étend de 3,95 mm dans une dimension radiale ;
dans lequel la cuve de piston (210) a un volume de 42,1 cm³ ; et
dans lequel le cylindre de combustion a un taux de compression de 17,0:1.

2. Cylindre de combustion (100) selon la revendication 1, dans lequel l'injecteur de carburant (130) est monté à une extrémité du cylindre de combustion (120) faisant face à la couronne de piston (120).

3. Cylindre de combustion (100) selon l'une quelconque des revendications précédentes, dans lequel la différence entre l'angle du cône d'injection de carburant et un angle entre des côtés opposés de la portion tronconique est de 4,3 °.

4. Moteur à combustion interne comprenant le cylindre de combustion (100) selon l'une quelconque des revendications précédentes, et une soupape d'admission et une soupape d'échappement.
